# EUROPEAN PATENT APPLICATION

(11) **EP 4 832 452 A1**
(43) Date of publication of application: **28.10.2026**
(21) Application number: 24905825.6
(22) Date of filing: 25.10.2024
(51) Int. Cl.: H04L 51/10

(54) **METHOD AND APPARATUS FOR SENDING LIVE PHOTO IN CONVERSATION, METHOD AND APPARATUS FOR RECEIVING LIVE PHOTO IN CONVERSATION, AND DEVICE**

(30) Priority: 22.12.2023 CN 202311785224
(71) Applicant: Beijing Zitiao Network Technology Co., Ltd., Beijing 100190 (CN)
(72) Inventor: LIU, Jingchuan, Beijing 100028 (CN); WAN, Shiqi, Beijing 100028 (CN)
(74) Representative: Isarpatent
(86) International application number: PCT/CN2024/127308
(87) International publication number: WO 2025/130337

(57) **Abstract**

The present disclosure relates to the technical field of computers. Disclosed are a method for sending a live photo in a conversation, a method and apparatus for receiving a live photo in a conversation, and a device. The sending method comprises: from a conversation interface of a target conversation, a target sending user side obtaining a target live photo to be sent; in response to a live sending operation for the target live photo, generating a dynamic indicator corresponding to the target live photo; and generating target information on the basis of the target live photo and the dynamic indicator, and sending the target information to the target conversation. The receiving method comprises: a target receiving user side receiving target information from a conversation interface of a target conversation; parsing the target information to determine whether the target information carries a dynamic indicator; and in response to determining that the target information carries a dynamic indicator, displaying a target live photo corresponding to the target information in a live form.

## Description

### CROSS-REFERENCE TO RELATED APPLICATION(S)

The present application claims priority to Chinese Patent Application No. 202311785224.3, filed on December 22, 2023 and entitled "METHOD AND APPARATUS FOR SENDING LIVE PHOTO IN CONVERSATION, METHOD AND APPARATUS FOR RECEIVING LIVE PHOTO IN CONVERSATION, AND DEVICE", which is incorporated herein by reference in its entirety.

### FIELD

The present disclosure relates to the field of computer technologies, and in particular to a method and an apparatus for sending a live photo in a conversation, a method and an apparatus for receiving a live photo in a conversation, and a device.

### BACKGROUND

With development of computer technologies, applications supporting instant messaging have developed rapidly. At present, when a target sending user side sends a live photo (such as a live photo shot by a mobile terminal) through an instant messaging conversation of an application, the photo is sent in the form of a static photo, and it is difficult to send the photo in a dynamic form as previewed. Accordingly, only a normal static photo can be received at a target receiving user side, and it cannot be displayed in the form of a dynamic photo.

### SUMMARY

In view of this, embodiments of the present disclosure provide a method and an apparatus for sending a live photo in a conversation, a method and an apparatus for receiving a live photo in a conversation, and a device.

According to a first aspect, an embodiment of the present disclosure provides a method for sending a live photo in a conversation. The method includes: obtaining, in a conversation interface of a target conversation, a target live photo to be sent; in response to a live sending operation for the target live photo, generating a dynamic indicator corresponding to the target live photo; and generating target information based on the target live photo and the dynamic indicator, and sending the target information to the target conversation, such that a target receiving user side in the target conversation displays the target live photo corresponding to the target information in a live form based on the dynamic indicator carried in the target information.

According to a second aspect, an embodiment of the present disclosure provides a method for receiving a live photo in a conversation. The method includes: receiving target information from a conversation interface of a target conversation, where the target information is generated by a target sending user side in the target conversation based on a target live photo; parsing the target information to determine whether the target information carries a dynamic indicator; and when it is determined that the target information carries the dynamic indicator, displaying the target live photo corresponding to the target information in a live form.

According to a third aspect, an embodiment of the present disclosure provides an apparatus for sending a live photo in a conversation. The apparatus includes: an obtaining module configured to obtain, in a conversation interface of a target conversation, a target live photo to be sent; an indicator generation module, configured to generate a dynamic indicator corresponding to the target live photo in response to a live sending operation for the target live photo; and an information sending module, configured to generate target information based on the target live photo and the dynamic indicator, and send the target information to the target conversation, such that a target receiving user side in the target conversation displays the target live photo corresponding to the target information in a live form based on the dynamic indicator carried in the target information.

According to a fourth aspect, an embodiment of the present disclosure provides an apparatus for receiving a live photo in a conversation. The apparatus includes: an information receiving module, configured to receive target information, where the target information is generated by a target sending user side in a target conversation based on a target live photo; an information parsing module, configured to parse the target information to determine whether the target information carries a dynamic indicator; and a live display module, configured to, when it is determined that the target information carries the dynamic indicator, display the target live photo corresponding to the target information in a live form.

According to a fifth aspect, an embodiment of the present disclosure provides a computer device. The computer device includes: a memory and a processor, where the memory and the processor are communicatively connected to each other. The memory stores computer instructions. The processor executes the computer instructions to perform a method for sending a live photo in a conversation according to the first aspect or any implementation corresponding to the first aspect or perform a method for receiving a live photo in a conversation according to the second aspect or any implementation corresponding to the second aspect.

According to a sixth aspect, an embodiment of the present disclosure provides a computer-readable storage medium. The computer-readable storage medium stores computer instructions. The computer instructions are used to enable a computer to perform a method for sending a live photo in a conversation according to the first aspect or any implementation corresponding to the first aspect or perform a method for receiving a live photo in a conversation according to the second aspect or any implementation corresponding to the second aspect.

### BRIEF DESCRIPTION OF THE DRAWINGS

To more clearly describe the technical solutions in specific implementations of the present disclosure or in the prior art, the accompanying drawings for describing the specific implementations or the prior art will be briefly described below. Apparently, the accompanying drawings in the description below show some implementations of the present disclosure, and a person of ordinary skill in the art may still derive other accompanying drawings from these accompanying drawings without creative efforts.
FIG. 1 is a schematic flowchart of a method for sending a live photo in a conversation according to some embodiments of the present disclosure;
FIG. 2 is a schematic flowchart of another method for sending a live photo in a conversation according to some embodiments of the present disclosure;
FIG. 3 is a schematic diagram of a live shooting indicator of a shooting interface according to some embodiments of the present disclosure;
FIG. 4 is a schematic diagram of "Live On" according to some embodiments of the present disclosure;
FIG. 5 is a schematic diagram of an editing interface according to some embodiments of the present disclosure;
FIG. 6 is a schematic diagram of an image library display interface according to some embodiments of the present disclosure;
FIG. 7 is a schematic flowchart of a method for receiving a live photo in a conversation according to some embodiments of the present disclosure;
FIG. 8 is a schematic flowchart of another method for receiving a live photo in a conversation according to some embodiments of the present disclosure;
FIG. 9 is a schematic diagram of a conversation interface according to some embodiments of the present disclosure;
FIG. 10 is a block diagram of a structure of an apparatus for sending a live photo in a conversation according to an embodiment of the present disclosure;
FIG. 11 is a block diagram of a structure of an apparatus for receiving a live photo in a conversation according to an embodiment of the present disclosure; and
FIG. 12 is a schematic diagram of a hardware structure of a computer device according to an embodiment of the present disclosure.

### DETAILED DESCRIPTION OF EMBODIMENTS

To make the objectives, technical solutions, and advantages of embodiments of the present disclosure clearer, the technical solutions in embodiments of the present disclosure are described clearly and completely below with reference to the accompanying drawings in embodiments of the present disclosure. Apparently, the described embodiments are some rather than all of embodiments of the present disclosure. All other embodiments obtained by a person of ordinary skill in the art based on embodiments of the present disclosure without creative efforts shall fall within the protection scope of the present disclosure.

In the related art, when a sending user side sends a live photo (such as a live photo shot by a mobile terminal) to a receiving user side through private messaging of an application, the photo is sent in a form of a static photo, and it is difficult to send the photo in a dynamic form as previewed. There is a problem that it is difficult to send the live photo in the dynamic form. Correspondingly, only a normal static photo can be received at the receiving user side can only receive, and it cannot be displayed in a form of a dynamic photo.

On this basis, in a method for sending a live photo in a conversation according to an embodiment of the present disclosure, when it is detected that a user sends a target live photo, a corresponding dynamic indicator is generated for the target live photo, to add the dynamic indicator to information for sending the target live photo to generate target information, such that a target sending user side can send the target live photo in a live sending form. Therefore, the dynamic indicator indicates that the target live photo is a dynamic live photo, thereby implementing dynamic sending of the target live photo. In a method for receiving a live photo in a conversation according to an embodiment of the present disclosure, the dynamic indicator carried in the target information is identified to determine whether information content carried in the target information is the target live photo. When it is determined that the information content carried in the target information is the target live photo, a target receiving user side displays the target live photo in a live form, such that dynamic reception and dynamic viewing of the target live photo are implemented.

According to an embodiment of the present disclosure, an embodiment of a method for sending a live photo in a conversation is provided. It should be noted that steps shown in a flowchart of the accompanying drawings may be performed, for example, in a computer system including a group of computer-executable instructions. Although a logical order is shown in the flowchart, the steps shown or described may be performed in an order different from that shown herein in some cases.

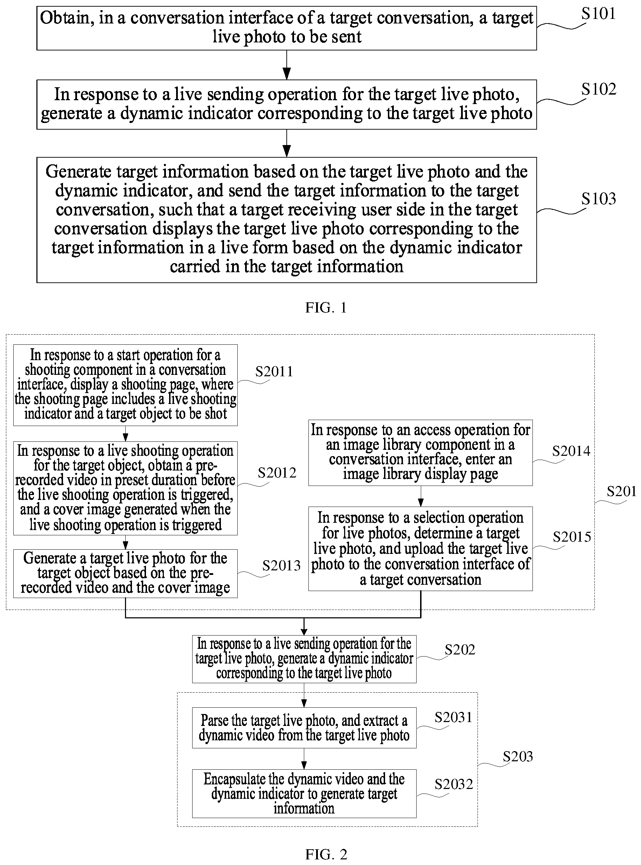

This embodiment provides a method for sending a live photo in a conversation. This method may be used on a target sending user side. FIG. 1 is a flowchart of the method for sending a live photo in a conversation according to an embodiment of the present disclosure. As shown in FIG. 1, the procedure includes the following steps.

Step S101: A target live photo to be sent is obtained in a conversation interface of a target conversation.

The target live photo is a dynamic photo sent from the target sending user side to a target receiving user side. Specifically, the target live photo includes dynamic content of specific duration (for example, a few seconds) and is presented in a form of a video and a static image. The conversation interface of the target conversation is a conversation interface of a communication conversation between the target sending user side and the target receiving user side.

Specifically, the target sending user side is provided with a camera and has a dynamic shooting function. A user may shoot any object in a real scene by using the camera. Accordingly, the target sending user side may invoke the dynamic shooting function in response to a shooting operation of the user to generate a target live photo for any object.

Specifically, the target sending user side has corresponding image storage space, such as an image library. The user may select a live photo of interest from the image library. Accordingly, the target sending user side may send, in response to a selection operation of the user, a selected live photo as the target live photo that needs to be sent to the target receiving user side.

Certainly, the target live photo may alternatively be a live photo received by the target sending user side from another device. A manner of obtaining the target live photo is not limited herein, and may be determined by a person skilled in the art based on an actual requirement.

Step S102: In response to a live sending operation for the target live photo, a dynamic indicator corresponding to the target live photo is generated.

The target live photo has a live indicator. When the live indicator is in an on state, the target live photo may be sent in a live form. When the live indicator is in an off state, the target live photo may be sent in a static form.

The live sending operation represents an operation of sending the target live photo in the live form. The dynamic indicator is a dynamic flag bit generated for the target live photo, and the dynamic indicator indicates that an asset currently sent is a live photo. Specifically, when it is detected that the user sends the target live photo in the live form, the target sending user side may generate, in response to the live sending operation of the user, the corresponding dynamic indicator in a process of sending the target live photo.

Step S103: Target information is generated based on the target live photo and the dynamic indicator, and the target information is sent to the target conversation, such that the target receiving user side in the target conversation displays the target live photo corresponding to the target information in the live form based on the dynamic indicator carried in the target information.

The target information is information generated based on a communication protocol between the target sending user side and the target receiving user side. Specifically, the target sending user side uses the target live photo as photo information to be sent, and encodes the target live photo, to generate photo encoding information. An information format and an information transmission rule are determined in combination with the communication protocol between the target sending user side and the target receiving user side, the photo encoding information is encapsulated based on the information format and the information transmission rule to generate photo sending information of the target live photo, and the dynamic indicator is added to the photo sending information to generate the target information.

The target sending user side may send the generated target information to the target receiving user side via a network connection (such as Wi-Fi or a mobile network). Correspondingly, the target receiving user side may receive the target information sent by the target sending user side, and parse and process the target information to identify whether the target information carries the dynamic indicator. When it is identified that the target information carries the dynamic indicator, the target live photo corresponding to the target information is received and displayed in the live form.

In the method for sending a live photo in a conversation according to this embodiment, when detecting that the user sends the target live photo, the target sending user side generates the corresponding dynamic indicator for the target live photo, to add the dynamic indicator in the information for sending the target live photo to generate the target information, such that the target sending user side can send the target live photo in a live sending form. Therefore, the dynamic indicator indicates that the target live photo is a dynamic live photo, thereby implementing dynamic sending of the target live photo.

This embodiment provides a method for sending a live photo in a conversation. This method may be used on a target sending user side. FIG. 2 is a flowchart of the method for sending a live photo in a conversation according to an embodiment of the present disclosure. As shown in FIG. 2, the procedure includes the following steps.

Step S201: A target live photo to be sent is obtained in a conversation interface of a target conversation.

Specifically, step S201 includes the following steps.

Step S2011: In response to a start operation for a shooting component in the conversation interface, a shooting interface is displayed, where the shooting interface includes a live shooting indicator and a target object to be shot.

The shooting component is a functional component deployed on the conversation interface of the target conversation for starting a camera. The live shooting indicator indicates whether to shoot the target object in a live manner. The target object represents an object in an actual scene to be shot by the camera. The target object may be an object, a person, or an environment. The target object to be shot is not specifically limited herein.

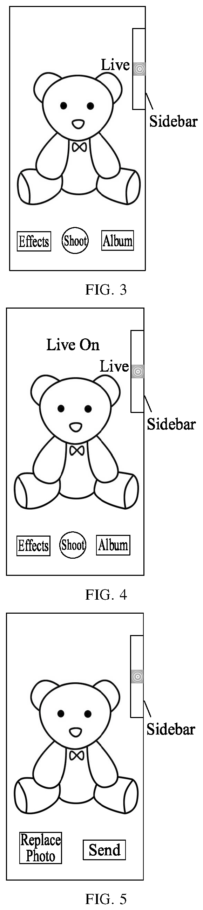

When a user triggers the shooting component to enable a shooting function, the shooting component in the conversation interface may invoke the shooting function of the shooting component in response to the start operation of the user, and display the shooting interface used to shoot the target object. The target object to be shot is displayed on the shooting interface, and a function bar is disposed on the shooting interface. The function bar displays the live shooting indicator. As shown in FIG. 3, a doll to be shot is displayed on the shooting interface, and the live shooting indicator is disposed in a sidebar of the shooting interface on which the doll is displayed.

Step S2012: In response to the live shooting operation for the target object, a pre-recorded video in preset duration before the live shooting operation is triggered is obtained, and a cover image generated when the live shooting operation is triggered.

The live shooting operation is an operation of performing live shooting on the target object. The live shooting operation may be triggered by using a physical button disposed on a device where the target sending user side is located, or may be triggered by using a virtual button disposed on the shooting interface. This is not specifically limited herein.

The preset duration is preset pre-recording duration for the target object, for example, 3 seconds, 5 seconds, or the like. The pre-recorded video is a recorded video generated for the target object before the shooting operation is triggered. The cover image is a static image generated for the target object, and the cover image is determined as a cover frame of the pre-recorded video.

Specifically, as shown in FIG. 3, a virtual shooting button is disposed on the shooting interface. When a shooting angle and a shooting environment for the doll are determined, the user may trigger the virtual shooting button to obtain a pre-recorded video and a cover image for the doll. Accordingly, the virtual shooting button may capture, in response to a tap operation initiated by the user, a video from 3 seconds before the virtual shooting button is tapped as the pre-recorded video. A doll image captured when the virtual shooting button is tapped is used as the cover image, and the cover image is used as the cover frame of the pre-recorded video.

Step S2013: The target live photo for the target object is generated based on the pre-recorded video and the cover image.

The cover image is used as the cover frame of the pre-recorded video, and the pre-recorded video and the cover image are combined, to generate the target live photo presented in the form of the pre-recorded video and the static cover image, such that when the user views the target live photo, the pre-recorded video of the target live photo can be played automatically, and the static image corresponding to the cover image is displayed after playback stops.

It should be noted that shooting the target object at a fast speed or a slow speed does not affect use of a live shooting function. When a countdown is started, the live shooting function is not effective, and the target object is still shot in a normal shooting manner.

In some optional embodiments, the method may further include: when the live shooting indicator is in an off state, in response to a turn-on trigger operation for the live shooting indicator, generating the target live photo for the target object.

The live shooting indicator has an on state and the off state. When the live shooting indicator is in the off state, the target sending user side can only shoot a static image of the target object when invoking the shooting function. To generate the target live photo of the target object, the live shooting indicator needs to be in the on state.

When the user views that the live shooting indicator is in the off state, the user may tap the live shooting indicator to switch the off state to the on state. Accordingly, the live shooting indicator may be switched from the off state to the on state in response to the turn-on trigger operation initiated by the user. Then, the target object is shot by using the camera to generate the target live photo.

In the aforementioned implementation, turn-on of the live shooting indicator is supported. When the live shooting indicator is in the off state, the live shooting indicator is turned on to shoot the live photo for the target object, thereby implementing flexible generation of the live photo.

In some optional embodiments, the method may further include: in response to a turn-on/turn-off operation for the live shooting indicator, displaying turn-on/turn-off prompt information of the live shooting indicator on the shooting interface.

The turn-on/turn-off operation is an operation triggered by the user performing status switching on the live shooting indicator on the shooting interface. For example, when the live shooting indicator is in the off state, the status is changed to the on state by tapping the indicator once; and when the live shooting indicator is in the on state, the status is changed to the off state by tapping the indicator once. When it is detected that the user triggers the turn-on/turn-off operation for the live shooting indicator, the on-off state of the live shooting indicator is switched in response to the turn-on/turn-off operation initiated by the user, and the turn-on/turn-off prompt information corresponding to the on-off state is displayed on the shooting interface.

The turn-on/turn-off prompt information informs the user of a current on-off state of the live shooting indicator. Specifically, the turn-on/turn-off prompt information may be color information. For example, white indicates the on state, and black indicates the off state. The turn-on/turn-off prompt information may alternatively be text information, such as "Live On" and "Live Off". As shown in FIG. 4, when the live shooting indicator is switched to the on state, "Live On" is displayed at the top of the shooting interface.

In the aforementioned implementation, on-off state control of the live shooting indicator is supported, and the turn-on/turn-off prompt information may be displayed on the shooting interface to remind the user of the current live shooting indicator, to facilitate control of on-off of the live shooting indicator in combination with an actual requirement.

In some optional embodiments, the method may further include the following steps.

Step a1: The on-off state of the live shooting indicator in the last shooting process is obtained.

Step a2: A target on-off state of the live shooting indicator in a current shooting process is determined based on the on-off state.

Live shooting has a memory function, that is, it can record the status of the live shooting indicator during the last shooting of the user. Specifically, the target sending user side detects the on-off state of the live shooting indicator selected by the user in the last shooting process. When entering the current shooting process, the on-off state in the last shooting process is used as the target on-off state of the live shooting indicator in the current shooting process.

For example, if the live shooting indicator is in the on state in the last shooting process, the live shooting indicator is in the on state by default when the current shooting process is started. If the live shooting indicator is in the off state in the last shooting process, the live shooting indicator is in the off state by default when the current shooting process is started.

In the aforementioned implementation, the target on-off state of the live shooting indicator in the current shooting process is determined based on the on-off state of the live shooting indicator in the last shooting process to implement the memory function for the live shooting indicator, to facilitate determination of the on-off state of the live shooting indicator in combination with the memory function. This prevents the user from repeatedly setting the on-off state of the live shooting indicator.

In some optional embodiments, the method may further include the following steps.

Step b1: A number of entering the shooting interface is detected.

Step b2: When the number of times does not exceed a preset threshold, guidance information corresponding to the live shooting indicator is displayed on the shooting interface.

The preset threshold is a preset number of times of displaying the guidance information, such as 3 times, 5 times, or the like. This is not specifically limited herein. The guidance information is a guidance indication generated for the live shooting indicator. The guidance information may be a style of a live indicator (icon) and a text "Live", as shown in FIG. 3 and FIG. 4.

Each time when entering the shooting interface, the target sending user side accumulates the number of times of entering the shooting interface, to obtain the number of times of entering the shooting interface. Compare the number of times to the preset threshold to determine whether the number of times exceeds the preset threshold. When the number of times exceeds the preset threshold, the guidance information for the live shooting indicator is no longer displayed. Otherwise, the guidance information for the live shooting indicator is displayed on the shooting interface.

That the preset threshold is 3 is used as an example, when entering the shooting interface for the first three times, the guidance information for the live shooting indicator is displayed and presented by default. After 3 times of display, the guidance information for the live shooting indicator disappears.

In some optional implementations, when the guidance information for the live shooting indicator is displayed, and the user taps the guidance information, the guidance information automatically disappears and is no longer displayed.

In the aforementioned implementation, the guidance information for the live shooting indicator is displayed, such that it is convenient to guide the user to understand the live shooting function of the target object.

In some optional embodiments, before generating the target live photo for the target object, the method may further include the following steps.

Step c1: In response to an editing operation for the target object in the target live photo, a target editing object is obtained.

Step c2: Live shooting is re-triggered based on the target editing object.

The editing operation is an operation performed by the user for editing the target object displayed in the target live photo. As shown in FIG. 5, a function bar is disposed on an editing interface. The function bar includes editing components, and an editing page is entered by triggering each editing component to perform editing. Editing manners may include flipping, special effects, filters, beautification, and the like. This is not specifically limited herein.

When the user needs to edit a currently displayed target object, a corresponding editing component may be triggered. Accordingly, in response to the editing operation initiated by the user, the editing component may obtain the corresponding target editing object after the editing operation is completed.

After it is detected that the user completes editing of the target object, the interface returns from the editing page of the target object to the shooting interface, and a live shooting procedure is re-triggered to perform live shooting on the target editing object obtained through editing, to obtain the corresponding target live photo.

In the aforementioned implementation, editing for the target object displayed in the target live photo is supported to obtain the target object that meets the user's expectation. Live shooting is performed again after the target object is edited, thereby implementing accuracy of generation of the target live photo.

In some optional embodiments, after generating the target live photo for the target object, the method may further include: when previewing the target live photo, first displaying the cover image corresponding to the target live photo and then playing the pre-recorded video; or first playing the pre-recorded video and then displaying the cover image.

The cover image is a static image corresponding to the cover frame of the target live photo. The pre-recorded video is a live video of the target object. After live shooting is triggered, the shooting interface is switched to the editing page to generate the target live photo. Then, the user may preview the target live photo obtained through shooting on the editing page, such that the user confirms whether the target live photo meets a shooting requirement.

Specifically, when previewing the target live photo, the target sending user side may display the cover image corresponding to the cover frame by default, and automatically play the live pre-recorded video. The process is cyclically played until the preview ends.

Specifically, when previewing the target live photo, the target sending user side may alternatively play the live pre-recorded video by default, and then display the cover image corresponding to the cover frame. The process is cyclically played until the preview ends.

In the aforementioned implementation, the preview of that target live photo is supported, such that whether the target live photo meets the user's expectation is confirmed through the preview.

In some optional embodiments, the method may further include the following steps.

Step d1: Duration in which the shooting operation is triggered is obtained.

Step d2: Upon the duration reaching first preset duration, video recording for the target object is started.

The first preset duration is preset duration for starting video recording, for example, 2 seconds. When detecting that the user triggers the shooting operation, the target sending user side obtains the duration in which the shooting operation is triggered. The duration is compared to the first preset duration to determine whether the duration in which the shooting operation is triggered reaches the first preset duration. Upon the duration reaching the first preset duration, video recording is started.

As shown in FIG. 3, the virtual shooting button is disposed on the shooting interface, and the user may press and hold the virtual shooting button to start video recording for the doll. Accordingly, the virtual shooting button may directly trigger a video recording function for the doll in response to a pressing and holding operation initiated by the user.

In the aforementioned implementation, after the duration in which the shooting operation is triggered reaches specific duration, video recording is directly started, thereby implementing flexible starting of video recording.

Specifically, step S201 may further include the following steps.

Step S2014: In response to an access operation for an image library component in the conversation interface, an image library display interface is entered.

The image library display interface includes live photos, and live indicators are displayed on the live photos.

A database for storing images is disposed in the device where the target sending user side is located, for example, an album that stores images. Stored image content in the image library may include live photos shot by using the camera, videos recorded by using the camera, live photos or videos received from another device, photos or videos downloaded from an application or a network, and the like. Content stored in the image library is not specifically limited herein.

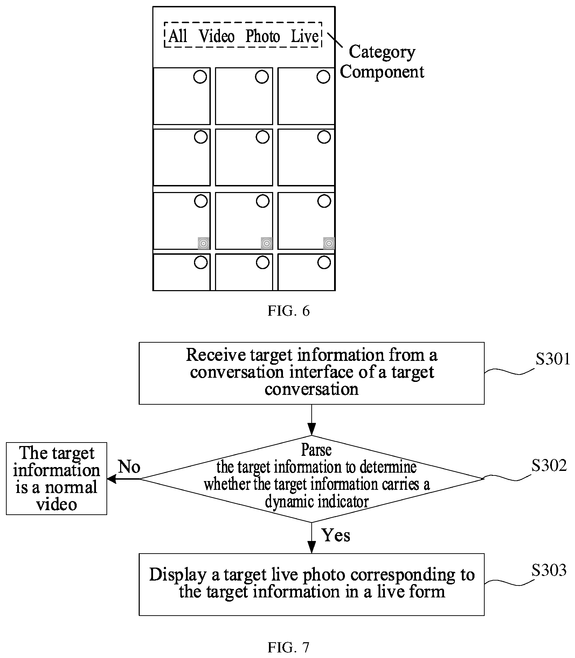

The access operation is an operation triggered when the user initiates an access to the image library component. When it is detected that the user triggers the image library component, the image library component may enter the image library display interface in response to the user's access operation, the image content stored in the image library is displayed on the image library display interface, and corresponding live indicators are displayed on live photos, as shown in FIG. 6.

Step S2015: In response to a selection operation for the live photos, the target live photo is determined, and the target live photo is uploaded to the conversation interface of the target conversation.

The selection operation is an operation performed by the user to select the live photo from the image library display interface. Each image displayed on the image library display interface is provided with a selection component, as shown in FIG. 6, and a selection circle is provided at the upper right corner of the image.

Specifically, the live indicators are displayed on the live photos, and the user may select a live photo to share by viewing the images in the image library display interface. When the user selects a live photo as the target live photo, the live photo in the image library display interface may respond to the user's selection operation, and a selection indicator (for example, "√") is marked in the selection circle of the selected live photo to mark the selected live photo as the target live photo. Then, the target live photo is uploaded to the conversation interface of the target conversation between the target sending user side and the target receiving user side to send the target live photo to the target receiving user side through the conversation interface of the target conversation.

In some optional embodiment, a plurality of category components are disposed on the image library display interface, and the category components are used to obtain each type of image from the image library display interface by filtering. As shown in FIG. 6, the category components include a video category component, a photo category component, a live category component, and the like.

Accordingly, the method may further include: in response to a trigger operation for the live category component, obtaining all live photos from the image library display interface by filtering.

The user may filter the image content contained in the image library by using the live category component. Accordingly, in response to the trigger operation initiated by the user, the live category component in the image library display interface may obtain all live photos contained in a live category from the image library display interface by filtering.

Specifically, as shown in FIG. 5, after entering the image library display interface, all image content is displayed on the image library display interface. When it is detected that the user taps the "Live" component, the image content displayed on the image library display interface is filtered, all live photos are obtained from the image library by filtering, and thumbnails of all live photos are displayed on the image library display interface.

In the aforementioned implementation, filtering of live photos is supported, such that it is ensured that the target live photo can be quickly selected from the image library, and a determination speed of the target live photo is improved.

In some optional embodiments, the method may further include: in response to a trigger operation for a live indicator, switching a sending form of the target live photo based on the trigger operation.

When the live indicator is displayed in a first form, the target live photo is sent in a static form. When the live indicator is displayed in a second form different from the first form, the target live photo is sent in a live form.

The first form is an indicator display form when the target live photo is sent in the static form, for example, the indicator is displayed in white. The second form is an indicator display form when the target live photo is sent in the live form, for example, the indicator is displayed in yellow. The target sending user side identifies the display form of the live indicator in the target live photo to determine, based on the display form, whether the target live photo is sent in the static form or in the live form.

In the aforementioned implementation, the live indicator is displayed in different forms to determine the sending form of the target live photo based on the different forms, such that live sending and static sending of the target live photo can be both considered.

In some optional embodiments, the method may further include: in response to a preview operation for the target live photo, entering a preview interface of the target live photo, displaying, the cover image corresponding to the target live photo on the preview interface, and playing a dynamic video corresponding to the target live photo.

When the target live photo is selected, the user may preview the selected target live photo, such that the user views playback effect of the target live photo. Specifically, when it is detected that the user initiates the preview operation, the interface is switched from the display interface to the preview interface to display the corresponding target live photo operation on the preview interface. In a preview process, the cover image corresponding to the target live photo is displayed on the preview interface, then the dynamic video corresponding to the target live photo is played, playback is stopped after playback of the dynamic video is completed, and the cover image corresponding to the target live photo is displayed.

In the aforementioned implementation, preview of the target live photo selected from the image library is support, such that dynamic video preview and cover image preview of the target live photo are implemented.

In some optional embodiments, the method may further include: in response to a tap operation for the target live photo, in a case that tap duration of the tap operation exceeds a second preset duration, generating a playback reminder, playing the dynamic video corresponding to the target live photo, and displaying the cover image corresponding to the target live photo after the tap operation ends.

The tap duration is duration of tapping the target live photo. The second preset duration is preset duration for playing the dynamic video, for example, 1 second or 2 seconds. The playback reminder is used to remind the user that the dynamic video corresponding to the target live photo is about to be played, and the reminder may be a vibration reminder or a sound reminder. This is not specifically limited herein. When detecting that the user taps the target live photo, the target sending user side obtains the tap duration of the user tapping the target live photo, and compares the tap duration to the second preset duration to determine whether the tap duration reaches the second preset duration. In a case that the tap duration reaches the second preset duration, the corresponding playback reminder is generated, and the target live photo is displayed in the form of the dynamic video and the static cover image. After the tap operation ends, an automatic return to the static cover image is performed for display.

For example, when the user presses and holds the target live photo, vibration effect is produced, and the dynamic video of the target live photo is played. When the user releases the hand, playback of the dynamic video ends, and the cover image of the target live photo is restored.

In the aforementioned implementation, upon the tap duration reaching the second preset duration, generation of the playback reminder is supported, and the dynamic video is displayed while the play reminder is generated. After tapping ends, the cover image is displayed, thereby implementing display control for the target live photo.

In some optional embodiments, the method may further include the following steps.

Step e1: In response to an editing trigger operation for the target live photo, the editing interface for the target live photo is entered.

Step e2: In response to a photo editing operation generated in the editing interface, an edited target live photo is obtained.

The editing trigger operation is an operation for editing the target live photo. When detecting the editing trigger operation initiated by the user, the target sending user side may switch from the display interface of the target live photo to the editing interface of the target live photo in response to the editing trigger operation of the user, such that the user edits the target live photo through the editing interface.

The editing interface includes a plurality of editing items, such as beautification, filters, personalized text, and the like. When detecting the photo editing operation initiated by the user, the target sending user side may correspondingly edit the target live photo in response to the photo editing operation of the user, to obtain the edited target live photo.

In the aforementioned implementation, switching from the image library display interface to the editing interface is supported, thereby implementing flexible editing of the target live photo.

Step S202: In response to a live sending operation for the target live photo, the dynamic indicator corresponding to the target live photo is generated. For detailed descriptions, refer to relevant descriptions of steps corresponding to the aforementioned embodiment. This is not repeated herein.

Step S203: Target information is generated based on the target live photo and the dynamic indicator, and the target information is sent to the target conversation, such that the target receiving user side in the target conversation displays the target live photo corresponding to the target information in the live form based on the dynamic indicator carried in the target information.

Specifically, step S203 may include the following steps.

Step S2031: The target live photo is parsed, and the dynamic video is extracted from the target live photo.

The target live photo includes the static cover image and the dynamic video, where the dynamic video is the pre-recorded video generated when the target live photo is shot, the cover image is an image corresponding to the cover frame. The target sending user side has a photo parsing function, and may parse the target live photo based on a pre-employed photo parsing manner, to obtain a series of static image frames corresponding to the target live photo. Stitching each static image frame based on a preset time interval and playback time sequence to obtain the dynamic video corresponding to the target live photo.

Specifically, the target sending user side may obtain a corresponding media asset object by using a media asset class (for example, obtaining a corresponding PHAsset object by using a PHAsset class), and may obtain and manage photo and video assets of the target sending user side by using the media asset object. This includes obtaining thumbnails, original images, dates, location information, and the like of photos.

Then, a property of the media asset object is used to check whether the photo to be sent by the user is a live photo. If it is confirmed that the photo to be sent by the user is the live photo, data related to the live photo may be requested through a photo manager (such as a PHImageManager under the PHAsset class). Therefore, the dynamic video and the like contained in the live photo is extracted from the data related to the live photo.

In some optional implementation, after the target sending user side determines the target live photo that is determined to be sent, the live indicator is displayed in the target live photo (for example, the live indicator is displayed at the bottom of the target live photo). When the live indicator is in a selected state, the target live photo is sent to the target receiving user side in the live form. When the live indicator is in an unselected state, a corresponding binary static photo asset is extracted from the target live photo by using the media asset object, and the static photo is sent to the target receiving user side as a static photo.

Step S2032: The dynamic video and the dynamic indicator is encapsulated to generate the target information.

There is a preset communication protocol between the target sending user side and the target receiving user side. The communication protocol includes an information format and an information transmission rule. The dynamic video is encapsulated according to the communication protocol to generate video sending information, and the dynamic indicator is added to the generated video sending information to generate the target information. The dynamic indicator indicates that the currently generated target information is the target live photo. Therefore, sending of the target live photo can be converted into sending of the video asset.

When receiving the target information, the target receiving user side can identify the dynamic indicator carried in the target information to determine, based on the dynamic indicator, whether the target information is displayed in the form of a normal video asset or is displayed based on the live form of the target live photo.

In the method for sending a live photo in a conversation according to this embodiment, the pre-recorded video in the preset duration before the live shooting operation is triggered and the cover image generated when the live shooting operation is triggered are combined to implement shooting for the live photo of the target object, thereby facilitating flexible shooting of a live photo of any object in an actual scene. In addition, selection, from the image library, of the target live photo that needs to be sent is supported, thereby implementing flexible obtaining of the target live photo. By extracting the dynamic video corresponding to the target live photo to encapsulate the dynamic video and the dynamic indicator as the target information, the target live photo can be converted into a video for sending, thereby implementing dynamic sending of the target live photo.

According to an embodiment of the present disclosure, an embodiment of a method for receiving a live photo in a conversation is provided. It should be noted that steps shown in a flowchart of the accompanying drawings may be performed, for example, in a computer system including a group of computer-executable instructions. Although a logical order is shown in the flowchart, the steps shown or described may be performed in an order different from that shown herein in some cases.

This embodiment provides a method for receiving a live photo in a conversation. This method may be used on a target receiving user side. FIG. 7 is a flowchart of a method for receiving a live photo in a conversation according to an embodiment of the present disclosure. As shown in FIG. 7, the procedure includes the following steps.

Step S301: Target information is received from a conversation interface of a target conversation.

The target information is generated by a target sending user side in the target conversation based on a target live photo. For a manner of generating the target information, refer to relevant descriptions corresponding to the aforementioned embodiment. This is not repeated herein.

There is a corresponding communication protocol between the target sending user side and the target receiving user side, and the target sending user side sends the target information to the target receiving user side according to the communication protocol. Accordingly, the target receiving user side may receive the target information sent by the target sending user side according to the communication protocol.

Step S302: The target information is parsed to determine whether the target information carries a dynamic indicator.

The dynamic indicator indicates whether the target information is a normal video or the target live photo. When receiving the target information, the target receiving user side parses the target information according to the communication protocol to obtain each field carried in the target information.

Then, content of each field is detected to determine whether the target information carries the dynamic indicator. When it is determined that the target information carries the dynamic indicator, step S303 is performed. Otherwise, it indicates that the target information is the normal video, and the target information is displayed in a video form.

Step S303: When it is determined that the target information carries the dynamic indicator, the target live photo corresponding to the target information is displayed in a live form.

A video player for playing the live photo is deployed on the target receiving user side. When it is determined that the target information carries the dynamic indicator, it indicates that the target information is the target live photo. In this case, the target receiving user side may play the target live photo in the live form by using the video player.

In the method for receiving a live photo in a conversation according to this embodiment, the target receiving user side identifies the dynamic indicator carried in the target information to determine whether information content carried in the target information is the target live photo. When determining that the information content carried in the target information is the target live photo, the target receiving user side may display the target live photo in the live form, such that dynamic reception and dynamic viewing of the target live photo are implemented.

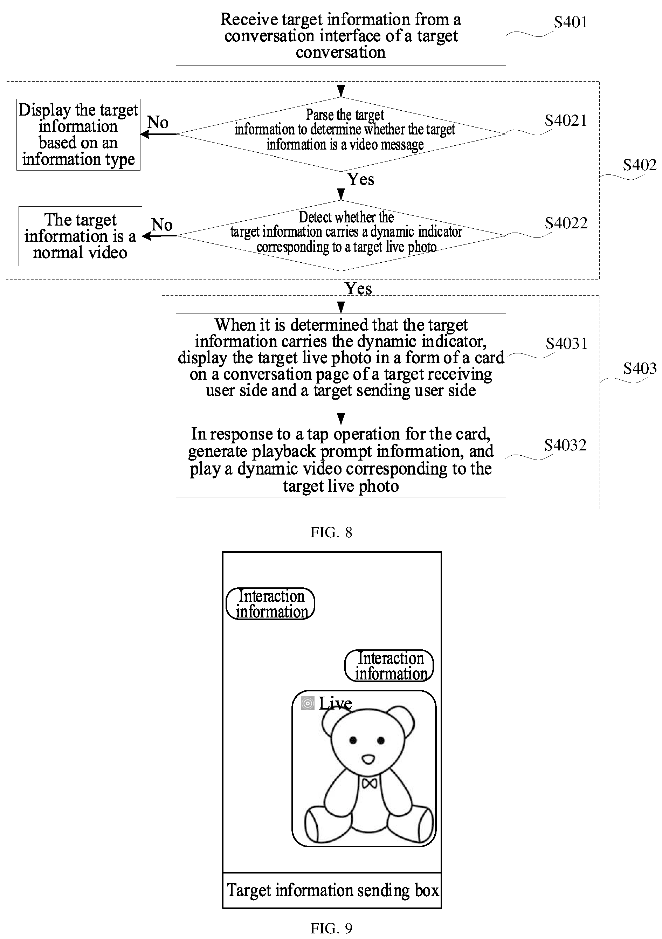

This embodiment provides a method for receiving a live photo in a conversation. This method may be used on a target receiving user side. FIG. 8 is a flowchart of the method for receiving a live photo in a conversation according to an embodiment of the present disclosure. As shown in FIG. 8, the procedure includes the following steps.

Step S401: Target information is received from a conversation interface of a target conversation, where the target information is generated by a target sending user side in the target conversation based on a target live photo. For detailed descriptions, refer to relevant descriptions of the method corresponding to the aforementioned embodiment. This is not repeated herein.

Step S402: The target information is parsed to determine whether the target information carries a dynamic indicator.

Specifically, step S402 may include the following steps.

Step S4021: The target information is parsed to determine whether the target information is a video message.

After receiving the target information, the target receiving user side parses the target information according to a communication protocol to determine an information type of the target information. The information type includes a video type, a photo type, an audio type, or the like.

Different information types have different type indicators. The target receiving user side parses the type indicator carried in the target information to determine whether the target information is the video message. When it is determined that the target information is the video message, step S4022 is performed. Otherwise, the target information is displayed based on the information type.

Step S4022: When the target information is the video message, whether the target information carries a dynamic indicator corresponding to the target live photo is detected.

The target sending user side sends the target live photo as a video asset. When it is determined that the target information is the video message, the target receiving user side may parse the video message according to a video parsing protocol to determine content of each field carried in the video message, and then detect whether the dynamic indicator is carried in the content of each field.

Step S403: When it is determined that the target information caries the dynamic indicator, the target live photo corresponding to the target information is displayed in a live form.

Specifically, step S403 may include the following steps.

Step S4031: When it is determined that the target information carries the dynamic indicator, the target live photo is displayed in a form of a card on the conversation interface between the target receiving user side and the target sending user side.

A cover image of the card is a cover image of the target live photo, and a live indicator is displayed at a preset location of the card.

The conversation interface is an interface in which the target receiving user side interacts with the target sending user side, and interaction information of the target receiving user side and the target sending user side is displayed on the conversation interface. When the target receiving user side receives the target information from the target sending user side, if it is determined that the target information is the target live photo, the target live photo is displayed on the conversation interface in the form of the card.

The preset location is a preset location for displaying the live indicator. Specifically, when the card is displayed on the conversation interface, the target receiving user side uses a cover frame of a dynamic video corresponding to the target live photo as the cover image of the card, and displays the live indicator on the cover image of the card. As shown in FIG. 9, when determining that the target information received by the target receiving user side is the target live photo, the target receiving user side displays the live indicator at the upper left corner of the cover image of the card.

Step S4032: In response to a tap operation for the card, playback prompt information is generated, and the dynamic video corresponding to the target live photo is played.

The playback prompt information is prompt information used to remind the user that the target live photo is about to be played, and the playback information may be vibration or a sound. This is not specifically limited herein. When detecting that a user taps the card, the target receiving user side may generate the playback prompt information in response to the tap operation of the user, and use a video player corresponding to the target live photo to automatically play the dynamic video corresponding to the target live photo. For example, when detecting that the user taps the card and playing the dynamic video corresponding to the target live photo, the target receiving user side generates vibration effect, and uses the corresponding video player to automatically play the dynamic video corresponding to the target live photo.

In the method for receiving a live photo in a conversation according to this embodiment, the target information is parsed to determine whether the target information is the video message. When it is determined that the target information is the video message, whether the target information carries the dynamic indicator is further detected. Therefore, whether video content carried in the target information is a normal video or the dynamic video of the target live photo is determined in combination with the dynamic indicator. The target live photo is displayed in a form of the card to automatically play the dynamic video corresponding to the target live photo when the card is tapped, thereby implementing dynamic viewing of the target live photo.

This embodiment further provides an apparatus for sending a live photo in a conversation. The apparatus is configured to implement the aforementioned embodiments and preferred implementations, and those that have already been described are not described herein again. As used below, the term "module" may be a combination of software and/or hardware that implements a predetermined function. Although the apparatus described in the following embodiment is preferably implemented in software, it is also possible and contemplated that the apparatus is implemented in hardware or a combination of software and hardware.

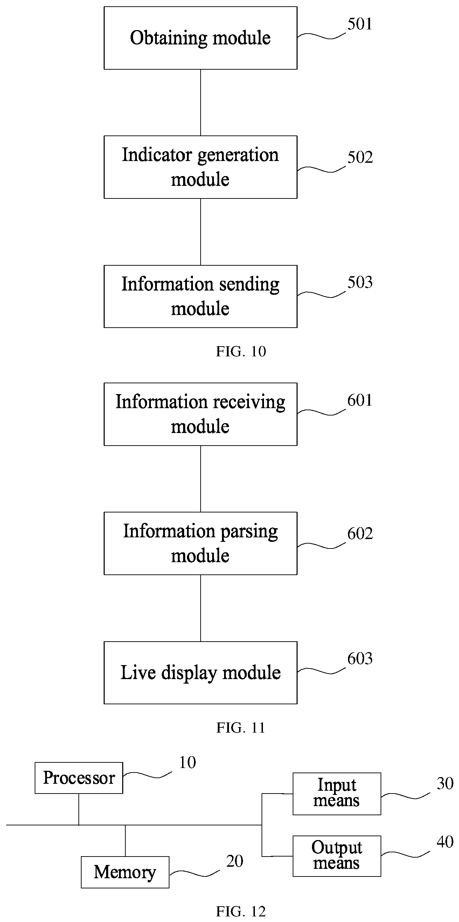

This embodiment provides an apparatus for sending a live photo in a conversation. The apparatus is used on a target sending user side. As shown in FIG. 10, the apparatus for sending a live photo in a conversation includes:
an obtaining module 501, configured to obtain, in a conversation interface of a target conversation, a target live photo to be sent;
an indicator generation module 502, configured to generate a dynamic indicator corresponding to the target live photo in response to a live sending operation for the target live photo; and
an information sending module 503, configured to generate target information based on the target live photo and the dynamic indicator, and send the target information to the target conversation, such that a target receiving user side in the target conversation displays the target live photo corresponding to the target information in a live form based on indicator information carried in the target information.

In some optional embodiments, the obtaining module 501 may include:
a display unit, configured to display a shooting interface in response to a start operation for a shooting component in the conversation interface, where the shooting interface includes a live shooting indicator and a target object to be shot;
a shooting unit, configured to, in response to the live shooting operation for the target object, obtain a pre-recorded video in preset duration before the live shooting operation is triggered, and a cover image generated when the live shooting operation is triggered; and
a live photo generation unit, configured to generate the target live photo for the target object based on the pre-recorded video and the cover image.

In some optional embodiments, the apparatus may further include:
a live turn-on unit, configured to, when the live shooting indicator is in an off state, in response to a turn-on trigger operation for the live shooting indicator, generate the target live photo for the target object.

In some optional embodiments, the apparatus may further include:
an turn-on/turn-off control unit, configured to display turn-on/turn-off prompt information of the live shooting indicator on the shooting interface in response to an turn-on/turn-off operation for the live shooting indicator.

In some optional embodiments, the apparatus may further include:
an on-off state memory unit, configured to obtain an on-off state of the live shooting indicator in the last shooting process; and
a target state determination unit, configured to determine, based on the on-off state, a target on-off state of the live shooting indicator in a current shooting process.

In some optional embodiments, the apparatus may further include:
a unit for detecting a number of times, configured to detect a number of times of displaying the shooting interface; and
a guidance unit, configured to, when the number of times does not exceed a preset threshold, display guidance information corresponding to the live shooting indicator on the shooting interface.

In some optional embodiments, the apparatus may further include:
an editing unit, configured to obtain a target editing object in response to an editing operation for the target object in the target live photo; and
a live re-shooting unit, configured to re-trigger shooting for the target live photo based on the target editing object.

In some optional embodiments, the apparatus may further include:
a preview unit, configured to, when previewing the target live photo, first display the cover image corresponding to the target live photo and then play the pre-recorded video; or first play the pre-recorded video and then display the cover image.

In some optional embodiments, the apparatus may further include:
a duration obtaining unit, configured to obtain duration in which the shooting operation is triggered; and
a recording unit, configured to, upon the duration reaching first preset duration, start video recording for the target object.

In some optional embodiments, the obtaining module 501 may further include:
an access unit, configured to enter an image library display interface in response to an access operation for an image library component in the conversation interface; and
a selection unit, configured to determine the target live photo in response to a selection operation for the live photos, and upload the target live photo to the conversation interface of the target conversation.

In some optional embodiments, the obtaining module 501 may further include:
a filtering unit, configured to obtain all live photos from the image library display interface in response to a trigger operation for a live category component by filtering.

In some optional embodiments, the apparatus may further include:
a sending form determination unit, configured to switch a sending form of the target live photo based on the trigger operation in response to a trigger operation for a live indicator.

In some optional embodiments, the apparatus may further include:
a live preview unit, configured to enter a preview interface of the target live photo in response to a preview operation for the target live photo, display the cover image corresponding to the target live photo on the preview interface, and play a dynamic video corresponding to the target live photo.

In some optional embodiments, the apparatus may further include:
a playback control unit, configured to, in response to a tap operation for the target live photo, in a case that tap duration of the tap operation exceeds a second preset duration, generate a playback reminder, play the dynamic video corresponding to the target live photo, and display the cover image corresponding to the target live photo after the tap operation ends.

In some optional embodiments, the apparatus may further include:
a switching unit, configured to enter an editing interface for the target live photo in response to an editing trigger operation for the target live photo; and
a photo editing unit, configured to obtain an edited target live photo in response to a photo editing operation generated on the editing interface.

In some optional embodiments, the information sending module 503 may include:
a video extraction unit, configured to parse the target live photo, and extract the dynamic video from the target live photo; and
an encapsulation unit, configured to encapsulate the dynamic video and the dynamic indicator to generate the target information.

Further functional descriptions of the aforementioned modules and the aforementioned units are the same as those in the aforementioned corresponding embodiments. Details are not described herein again.

The apparatus for sending a live photo in this embodiment is presented in a form of a functional unit, and the unit herein is an ASIC circuit, a processor and a memory that execute one or more software programs or fixed programs, and/or another device that can provide the aforementioned functions.

In the apparatus for sending a live photo in a conversation according to this embodiment, when detecting that the user sends the target live photo, the target sending user side generates the corresponding dynamic indicator for the target live photo, to add the dynamic indicator in information for sending the target live photo to generate the target information, such that the target sending user side can send the target live photo in a live sending form. Therefore, the dynamic indicator indicates that the target live photo is a dynamic live photo, thereby implementing dynamic sending of the target live photo.

This embodiment further provides an apparatus for receiving a live photo in a conversation. The apparatus is configured to implement the aforementioned embodiments and preferred implementations, and those that have already been described are not described herein again. As used below, the term "module" may be a combination of software and/or hardware that implements a predetermined function. Although the apparatus described in the following embodiment is preferably implemented in software, it is also possible and contemplated that the apparatus is implemented in hardware or a combination of software and hardware.

This embodiment provides an apparatus for receiving a live photo in a conversation. The apparatus is used on a target receiving user side. As shown in FIG. 11, the apparatus for receiving a live photo in a conversation includes:
an information receiving module 601, configured to receive target information from a conversation interface of a target conversation, where the target information is generated by a target sending user side in the target conversation based on a target live photo;
an information parsing module 602, configured to parse the target information to determine whether the target information carries a dynamic indicator; and
a live display module 603, configured to, when it is determined that the target information carries the dynamic indicator, display the target live photo corresponding to the target information in a live form.

In some optional embodiments, the information parsing module 602 may include:
a video determination unit, configured to parse the target information to determine whether the target information is a video message; and
an indicator determination unit, configured to, when the target information is the video message, detect whether the target information carries the dynamic indicator corresponding to the target live photo.

In some optional embodiments, the live display module 603 may include:
a live photo display unit, configured to, when it is determined that the target information carries the dynamic indicator, display the target live photo in a form of a card on the conversation interface between the target receiving user side and the target sending user side; and
a dynamic video playback unit, configured to, in response to a tap operation for the card, generate playback prompt information, and play the dynamic video corresponding to the target live photo.

Further functional descriptions of the aforementioned modules and the aforementioned units are the same as those in the aforementioned corresponding embodiments. Details are not described herein again.

The apparatus for receiving a live photo in this embodiment is presented in a form of a functional unit, and the unit herein is an ASIC circuit, a processor and a memory that execute one or more software programs or fixed programs, and/or another device that can provide the aforementioned functions.

In the apparatus for receiving a live photo in a conversation according to this embodiment, the target receiving user side identifies the dynamic indicator carried in the target information to determine whether information content carried in the target information is the target live photo. When it is determined that the information content carried in the target information is the target live photo, the target receiving user side displays the target live photo in the live form, such that dynamic reception and dynamic viewing of the target live photo are implemented.

This embodiment of the present disclosure further provide a computer device having the apparatus for sending a live photo in a conversation shown in FIG. 10 or the apparatus for receiving a live photo in a conversation shown in FIG. 11.

Please refer to FIG. 12. FIG. 12 is a schematic diagram of a structure of a computer device according to an optional embodiment of the present disclosure. As shown in FIG. 12, the computer device includes: one or more processors 10, a memory 20, and interfaces for connecting components, including a high-speed interface and a low-speed interface. The components are communicatively connected to each other through different buses, and can be mounted on a common motherboard or may be mounted in another manner according to a requirement. The processor may process instructions executed in the computer device, including instructions stored in or on the memory to display graphical information of a GUI on an external input/output means (for example, a display device coupled to the interface). In some optional implementations, if required, a plurality of processors and/or a plurality of buses may be used together with a plurality of memories. Likewise, a plurality of computer devices may be connected, each providing some of necessary operations (for example, as a server array, a set of blade servers, or a multi-processor system). One processor 10 is used as an example in FIG. 12.

The processor 10 may be a central processor, a network processor, or a combination thereof. The processor 10 may further include a hardware chip. The hardware chip may be an application-specific integrated circuit, a programmable logic device, or a combination thereof. The programmable logic device may be a complex programmable logic device, a field-programmable gate array, a generic array logic, or any combination thereof.

The memory 20 stores instructions executable by at least one processor 10 to enable the at least one processor 10 to perform the methods shown in the aforementioned embodiments.

The memory 20 may include a program storage area and a data storage area. The program storage area may store an operating system, and an application required by at least one function. The data storage area may store data created based on use of the computer device, and the like. In addition, the memory 20 may include a high-speed random-access memory, and may further include a non-transitory memory, such as at least one magnetic disk storage device, a flash memory device, or other non-transitory solid-state storage devices. In some optional implementations, the memory 20 optionally includes memories remotely disposed relative to the processor 10. The remote memories may be connected to the computer device via a network. Instances of the network include, but are not limited to, the Internet, intranets, local area networks, mobile communication networks, and combinations thereof.

The memory 20 may include a volatile memory, such as a random-access memory. The memory may alternatively include a non-volatile memory, such as a flash memory, a hard disk drive, or a solid-state hard disk. The memory 20 may alternatively include a combination of the aforementioned types of memories.

The computer device further includes an input means 30 and an output means 40. The processor 10, the memory 20, the input means 30, and the output means 40 may be connected through a bus or in another manner, for example, are connected through the bus in FIG. 12.

The input means 30 may receive entered numeric or character information and generate a key signal input related to a user setting and function control of the computer device, such as a touch screen, a keypad, a mouse, a trackpad, a touchpad, a pointing stick, one or more mouse buttons, a trackball, or a joystick. The output means 40 may include a display device, an auxiliary lighting apparatus (for example, an LED), a tactile feedback apparatus (for example, a vibration motor), and the like. The display device includes, but is not limited to, a liquid crystal display, a light-emitting diode, a display, and a plasma display. In some optional implementations, the display device may be a touch screen.

The computer device further includes a communication interface for the computer device to communicate with other devices or communication networks.

An embodiment of the present disclosure further provides a computer-readable storage medium. The aforementioned methods according to embodiments of the present disclosure may be implemented in hardware or firmware, or implemented as computer code that may be recorded in a storage medium, or implemented as computer code that is originally stored in a remote storage medium or a non-transitory machine-readable storage medium and downloaded via a network and that is to be stored in a local storage medium, such that the methods described herein may be processed by such software stored in a storage medium using a general-purpose computer, a special-purpose processor, or programmable or special-purpose hardware. The storage medium may be a magnetic disk, an optical disc, a read-only storage memory, a random storage memory, a flash memory, a hard disk drive, a solid-state drive, or the like. Further, the storage medium may alternatively include a combination of the aforementioned types of memories. It can be understood that a computer, a processor, a microprocessor controller, or programmable hardware includes a storage component that can store or receive software or computer code. When the software or computer code is accessed and executed by the computer, the processor, or the hardware, the methods shown in the aforementioned embodiments are implemented.

Although embodiments of the present disclosure are described with reference to the accompanying drawings, a person skilled in the art would provide various modifications and variations without departing from the spirit and scope of the present disclosure, and such modifications and variations shall all fall within the scope defined by the appended claims.

## Claims

1. A method for sending a live photo in a conversation, comprising:
obtaining, in a conversation interface of a target conversation, a target live photo to be sent;
in response to a live sending operation for the target live photo, generating a dynamic indicator corresponding to the target live photo; and
generating target information based on the target live photo and the dynamic indicator, and sending the target information to the target conversation, such that a target receiving user side in the target conversation displays the target live photo corresponding to the target information in a live form based on the dynamic indicator carried in the target information.

2. The method according to claim 1, wherein generating the target information based on the target live photo and the dynamic indicator comprises:
parsing the target live photo, and extracting a dynamic video from the target live photo; and
encapsulating the dynamic video and the dynamic indicator to generate the target information.

3. The method according to claim 1, wherein obtaining, in the conversation interface of the target conversation, the target live photo to be sent comprises:
in response to a start operation for a shooting component in the conversation interface, displaying a shooting interface, wherein the shooting interface comprises a live shooting indicator and a target object to be shot;
in response to a live shooting operation for the target object, obtaining a pre-recorded video in preset duration before the live shooting operation is triggered, and a cover image generated in response to the live shooting operation being triggered; and
generating the target live photo for the target object based on the pre-recorded video and the cover image.

4. The method according to claim 3, further comprising:
in a cast that the live shooting indicator is in an off state, in response to a turn-on trigger operation for the live shooting indicator, generating the target live photo for the target object.

5. The method according to claim 4, further comprising:
in response to a turn-on/turn-off operation for the live shooting indicator, displaying turn-on/turn-off prompt information of the live shooting indicator on the shooting interface.

6. The method according to claim 4, further comprising:
obtaining an on-off state of the live shooting indicator in a previous shooting process; and
determining, based on the on-off state, a target on-off state of the live shooting indicator in a current shooting process.

7. The method according to any one of claims 3 to 6, further comprising:
detecting a number of times of entering the shooting interface; and
in response to the number of times not exceeding a preset threshold, displaying guidance information corresponding to the live shooting indicator on the shooting interface.

8. The method according to claim 3, wherein after generating the target live photo for the target object, the method comprises:
in response to an editing operation for the target object in the target live photo, obtaining a target editing object; and
re-triggering live shooting based on the target editing object.

9. The method according to claim 3, wherein after generating the target live photo for the target object, the method comprises:
in response to the target live photo being previewed, first displaying the cover image corresponding to the target live photo and then playing the pre-recorded video; or first playing the pre-recorded video and then displaying the cover image.

10. The method according to claim 3, further comprising:
obtaining duration in which the shooting operation is triggered; and
in response to the duration reaching first preset duration, starting video recording for the target object.

11. The method according to claim 1, wherein obtaining, in the conversation interface of the target conversation, the target live photo to be sent comprises:
in response to an access operation for an image library component in the conversation interface, entering an image library display interface, wherein the image library display interface comprises live photos, and live indicators are displayed on the live photos; and
in response to a selection operation for the live photos, determining the target live photo and uploading the target live photo to the conversation interface of the target conversation.

12. The method according to claim 11, wherein the image library display interface comprises a live category component, and the method further comprises:
in response to a trigger operation for the live category component, obtaining all live photos from the image library display interface by filtering.

13. The method according to claim 11 or 12, further comprising:
in response to a trigger operation for the live indicator, switching a sending form of the target live photo based on the trigger operation,
wherein in response to the live indicator being displayed in a first form, the target live photo is sent in a static form; or in response to the live indicator being displayed in a second form different from the first form, the target live photo is sent in the live form.

14. The method according to claim 11, further comprising:
in response to a preview operation for the target live photo, entering a preview interface of the target live photo, displaying a cover image corresponding to the target live photo on the preview interface, and playing a dynamic video corresponding to the target live photo;
and/or
in response to a tap operation for the target live photo, in a case that tap duration of the tap operation reaches a second preset duration, generating a playback reminder, playing the dynamic video corresponding to the target live photo, and displaying the cover image corresponding to the target live photo after the tap operation ends.

15. The method according to claim 11, further comprising:
in response to an editing trigger operation for the target live photo, entering an editing interface of the target live photo; and
in response to a photo editing operation generated on the editing interface, obtaining an edited target live photo.

16. A method for receiving a live photo in a conversation, comprising:
receiving target information from a conversation interface of a target conversation, the target information being generated by a target sending user side in the target conversation based on a target live photo;
parsing the target information to determine whether the target information carries a dynamic indicator; and
in response to determining that the target information carries the dynamic indicator, displaying the target live photo corresponding to the target information in a live form.

17. The method according to claim 16, wherein parsing the target information to determine whether the target information carries the dynamic indicator comprises:
parsing the target information to determine whether the target information is a video message; and
in response to the target information being the video message, detecting whether the target information carries the dynamic indicator corresponding to the target live photo.

18. The method according to claim 16, wherein displaying the target live photo corresponding to the target information in the live form comprises:
displaying the target live photo in a form of a card on a conversation interface between the target receiving user side and the target sending user side, wherein a cover image of the card is a cover image of the target live photo, and a live indicator is displayed at a preset location of the card; and
in response to a tap operation for the card, generating playback prompt information, and playing a dynamic video corresponding to the target live photo.

19. An apparatus for sending a live photo in a conversation, comprising:
an obtaining module configured to obtain, in a conversation interface of a target conversation, a target live photo to be sent;
an indicator generation module configured to generate a dynamic indicator corresponding to the target live photo in response to a live sending operation for the target live photo; and
an information sending module configured to generate target information based on the target live photo and the dynamic indicator, and send the target information to the target conversation, such that a target receiving user side in the target conversation displays the target live photo corresponding to the target information in a live form based on the dynamic indicator carried in the target information.

20. An apparatus for receiving a live photo in a conversation, comprising:
an information receiving module configured to receive target information from a conversation interface of a target conversation, the target information being generated by a target sending user side in the target conversation based on a target live photo;
an information parsing module configured to parse the target information to determine whether the target information carries a dynamic indicator; and
a live display module configured to, in response to determining that the target information carries the dynamic indicator, display the target live photo corresponding to the target information in a live form.

21. A computer device, comprising:
a memory and a processor, wherein the memory and the processor are communicatively connected to each other, the memory stores computer instructions, and the processor executes the computer instructions to perform the method for sending a live photo in a conversation according to any of claims 1 to 15 or perform the method for receiving a live photo in a conversation according to any of claims 16 to 18.

22. A computer-readable storage medium, wherein the computer-readable storage medium stores computer instructions, and the computer instructions are used to cause a computer to perform the method for sending a live photo in a conversation according to any of claims 1 to 15 or perform the method for receiving a live photo in a conversation according to any of claims 16 to 18.
